# FASCICULE DE BREVET EUROPEEN

(11) **EP 0 970 930 B1**
(45) Date de publication et mention de la délivrance du brevet: **01.03.2006**
(21) Numéro de dépôt: 99401537.8
(22) Date de dépôt: 22.06.1999
(51) Int. Cl.: C03C 27/12, B32B 17/10, E06B 5/16, E06B 3/663, C09K 21/14

(54) **Vitrage anti-feu**
Feuerhemmende Verglasung
Fire-resistant glass

(30) Priorité: 23.06.1998 DE 19827867
(43) Date de publication de la demande: 12.01.2000
(73) Titulaire: Vetrotech Saint Gobain (International) AG, 6318 Walchwill (CH)
(72) Inventeur: Frommelt, Simon, 42781 Haan (DE); Gelderie, Udo, 52222 Stolberg (DE); Plum, Guido, 52457 Aldenhoven (DE)
(74) Mandataire: Cardin, Elise

(56) Documents cités:
- EP-A- 0 590 978
- EP-A- 1 161 343
- FR-A- 2 394 394
- PATENT ABSTRACTS OF JAPAN vol. 1999, no. 09, 30 juillet 1999 (1999-07-30) & JP 11 100239 A (SHIN ETSU POLYMER CO LTD), 13 avril 1999 (1999-04-13)
- PATENT ABSTRACTS OF JAPAN vol. 018, no. 241 (P-1733), 9 mai 1994 (1994-05-09) & JP 06 027442 A (NEC KAGOSHIMA LTD), 4 février 1994 (1994-02-04)
- PATENT ABSTRACTS OF JAPAN vol. 010, no. 304 (M-526), 16 octobre 1986 (1986-10-16) & JP 61 118209 A (SUMITOMO BAKELITE CO LTD), 5 juin 1986 (1986-06-05)
- PATENT ABSTRACTS OF JAPAN vol. 1997, no. 02, 28 février 1997 (1997-02-28) & JP 08 252888 A (SHIN ETSU POLYMER CO LTD), 1 octobre 1996 (1996-10-01)

## Description

La présente invention concerne un vitrage anti-feu composé d'au moins deux feuilles de verre reliées entre elles par une entretoise au niveau de leurs bords et d'une couche intermédiaire renfermant de l'eau remplissant l'espace intermédiaire entre les feuilles de verre, l'entretoise étant collée aux deux feuilles de verre et le joint périphérique entre l'entretoise et les zones périphériques des feuilles de verre étant étanché au moyen d'une matière adhésive d'étanchéité.

Les vitrages anti-feu de ce type sont connus par le document EP 0 590 978 Al. Dans le cas de ce vitrage anti-feu connu, la couche intermédiaire renfermant de l'eau est composée d'un hydrogel avec un polymère d'un dérivé de méthacrylamide faisant fonction de gélifiant. L'entretoise comprend un cordon profilé fait d'un matériau rigide, à savoir en métal ou en céramique, et du caoutchouc butyle fait office de colle entre l'entretoise et les feuilles de verre.

La fabrication de vitrages anti-feu présentant cette structure pose de réels problèmes lorsqu'il s'agit par exemple de vitres bombées. Il est en effet difficile de donner à des entretoises constituées d'un matériau rigide une forme telle que leur cintrage corresponde exactement au bombage des vitres. En outre, les vitres bombées individuelles présentent souvent des défauts de forme au niveau de leurs zones périphériques. Lors du collage des deux vitres au moyen d'un cadre d'entretoisement rigide, des tensions mécaniques peuvent facilement se produire dans ces conditions au niveau des zones périphériques, et dès lors des endroits non étanches peuvent apparaître au niveau des zones périphériques.

De plus, il s'est avéré que des vitrages caractérisés par cette structure connue ne présentent de ce fait pas toujours la durée de résistance au feu souhaitée, parce que, en cas d'incendie, la transmission de la chaleur par le châssis supportant le vitrage anti-feu au niveau de la zone périphérique du vitrage conduit à des contraintes de traction dommageables au niveau de la zone périphérique, ce qui entraîne un bris prématuré du vitrage.

L'invention a pour but de perfectionner les vitrages anti-feu cités dans le préambule de telle manière que le collage périphérique et l'étanchéité dans la zone de l'entretoise conviennent également pour la fabrication de vitrages anti-feu non plans et assurent en même temps une meilleure isolation calorifique des bords du vitrage en cas d'incendie.

Suivant l'invention, ce but est atteint en ce que l'entretoise comprend un cordon profilé en caoutchouc silicone.

Par opposition aux vitrages anti-feu connus, dans le cas de la structure suivant l'invention, on utilise une entretoise composée d'un matériau en caoutchouc élastique, lequel s'adapte aux irrégularités de la feuille de verre du fait de son élasticité et épouse facilement la forme des vitres même dans le cas de vitres fortement bombées. En raison de la faible conductivité thermique du caoutchouc silicone en comparaison avec celle du métal, le transfert de chaleur de la vitre exposée à l'incendie vers la zone marginale de l'autre vitre est fortement réduit.

De la sorte, on évite ou du moins on réduit fortement l'apparition de gradients thermiques dommageables dans l'autre vitre.

Le fait d'utiliser du caoutchouc silicone pour l'entretoise présente l'avantage majeur supplémentaire que, par opposition aux autres polymères, aucun produit de décomposition toxique n'est produit en cas d'incendie. Le caoutchouc silicone est de plus très résistant à la chaleur et présente une température de décomposition très élevée. En outre, le caoutchouc silicone est résistant d'un point de vue chimique et est facile à transformer de sorte que, selon les points de vue les plus variés, les verres anti-feu réalisés suivant l'invention présentent des avantages considérables.

De manière particulièrement avantageuse, on utilise des entretoises en caoutchouc silicone réticulable à haute température d'une dureté Shore-A de 40 à 60. Les caoutchoucs silicone de ce type se sont avérés particulièrement appropriés pour atteindre le but de l'invention.

Avantageusement, un cordon composé d'un matériau qui mousse sous l'action de la chaleur est disposé entre l'entretoise et la matière adhésive d'étanchéité.

La présence du matériau moussant dans le joint périphérique agit également en réduisant les gradients thermiques. La mousse qui se forme sous l'effet de la chaleur remplit en effet la zone de feuillure entre le bord du vitrage et le châssis en règle générale métallique et diminue ainsi dans des proportions importantes le transfert de chaleur du fond de la feuillure du châssis métallique vers le bord des vitres du vitrage.

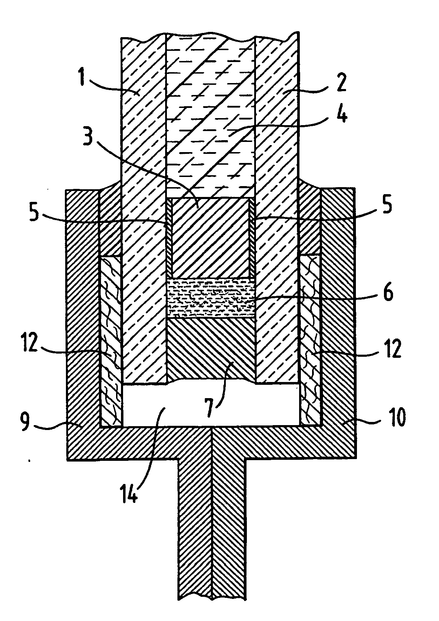

D'autres aspects de réalisation et développements avantageux de l'invention découlent des revendications dépendantes et de la description suivante d'un exemple de réalisation préférée de l'invention se référant au dessin annexé sur lequel :
- la figure unique montre dans une vue en coupe la zone périphérique d'un vitrage anti-feu suivant l'invention monté dans un châssis.

Le vitrage anti-feu représenté comprend deux feuilles 1, 2 de verre flotté trempées thermiquement, chacune de 6 mm d'épaisseur. Les feuilles de verre sont disposées à une distance réciproque de 12 mm avec intercalation de l'entretoise 3. L'espace intermédiaire entre les feuilles ou vitres 1, 2 et l'entretoise 3 est rempli d'un polysilicate alcalin aqueux, durci et transparent, tel que décrit dans le document WO 94/04 355. Cette couche de polysilicate alcalin 4 contient avantageusement de 30 à 55% en poids de dioxyde de silicium, de préférence au maximum 16 % en poids d'oxyde de métal alcalin et avantageusement jusqu'à 60 % en poids d'eau. Par échauffement à une température de 60°C à 90°C après remplissage dans l'espace intermédiaire entre les deux vitres, on a durci le polysilicate, un agent durcisseur supplémentaire présent dans la masse coulée assurant une accélération du processus de durcissement.

L'entretoise 3 est constituée d'un cordon profilé en caoutchouc silicone avantageusement de section rectangulaire ou carrée. Comme caoutchouc silicone, un polydiméthylsiloxane réticulable à haute température s'est avéré particulièrement avantageux pour atteindre ce but. L'entretoise 3 est collée aux vitres 1 et 2 au moyen de couches de colle 5.

Comme colles, les colles à base d'acrylate ont fait leurs preuves à cet effet, par exemple les rubans adhésifs de transfert en matière adhésive transparente à hautes performances composée à 100 % d'un polymère d'acrylate. Le polymère d'acrylate a un point de ramollissement aussi bas que possible, afin d'assurer un mouillage et une adhérence homogènes entre le verre et le caoutchouc silicone, sans que de l'air ne soit occlus entre les deux matériaux.

Dans la rainure périphérique entre les zones périphériques des deux vitres 1, 2, on dispose un cordon 6 d'un matériau moussant sous l'effet de la chaleur, après l'entretoise 3. Le matériau moussant 6 peut être par exemple à base de substances organiques et/ou inorganiques, en particulier de sels, comme par exemple des sels d'ammonium, des borates aqueux, des phosphates aqueux ou des oxydes, qui, sous l'effet de la chaleur, forment des substances facilement volatiles comme la vapeur d'eau, l'ammoniac, le dioxyde de soufre, l'acide borique, etc., qui provoquent la transformation en mousse de la matière. Ce matériau moussant est avantageusement inséré sous la forme de bandes profilées dans cette rainure périphérique avant que le bord du vitrage anti-feu ne soit étanché par la matière adhésive d'étanchéité. Des rubans de matériaux, dans lesquels un mélange de sulfates, carbonate de calcium, oxyde d'aluminium et dioxyde de silicium pulvérulents a été introduit, ont par exemple fait leurs preuves à cet effet.

On emploie de préférence comme colle d'étanchéité 7 un polysulfure, tel qu'il a fait ses preuves lors de la fabrication de vitrage isolant. La colle 7 peut être injectée sous pression dans la rainure de manière connue en soi au moyen d'une buse appropriée.

Le vitrage anti-feu est maintenu dans l'état monté par des profilés métalliques 9, 10, des bandes dites de blocage 12 étant disposées entre le verre anti-feu et les profilés métalliques 9, 10, c'est-à-dire des bandes d'un matériau calorifuge résistant aux hautes températures, par exemple des bandes en fibres céramiques, de telle sorte que les vitres soient protégées latéralement contre un échauffement trop rapide par les profilés métalliques 9,10.

Dans l'espace creux 14 entre les surfaces périphériques des vitres 1, 2 et le fond de la feuillure du châssis métallique, des raisons liées à la technique d'installation peuvent empêcher de placer directement un matériau calorifuge résistant aux hautes températures. L'effet isolant souhaité en cas d'incendie est pour cette raison atteint par le biais du placement du cordon 6 en matériau moussant. Dans ce cas, la mousse d'isolation qui se forme éjecte la colle 7 et remplit par la suite l'ensemble de l'espace creux 14.

Les vitrages anti-feu caractérisés par la structure décrite dans le détail précédemment, satisfont aux exigences de la classe de protection incendie F 60 comme révélé lors des tests incendie menés conformément à la norme DIN 4102, partie 13.

Les exigences de la classe de protection incendie F 30 sont déjà remplies dans le cas des vitrages anti-feu de ce type, lorsque les deux vitres en verre trempé présentent chacune une épaisseur de 5 mm et que la couche 4 en polysilicate alcalin présente une épaisseur de seulement 6 mm. L'épaisseur totale d'un vitrage pare-feu F-30 de ce type est de 16 mm. Lorsque l'on augmente l'épaisseur de la couche intermédiaire 4 à 25 mm et que l'on utilise des vitres épaisses de 6 mm, on atteint une durée de résistance au feu de plus de 90 minutes, de sorte que les vitrages pare-feu présentant la structure décrite avec une épaisseur totale de 37 mm sont à ranger dans la classe de résistance au feu F 90.

## Revendications

1. Vitrage anti-feu comprenant au moins deux feuilles de verre (1,2) reliées entre elles par une entretoise (3) au niveau de leurs bords et une couche intermédiaire (4) renfermant de l'eau remplissant l'espace intermédiaire entre les feuilles de verre (1,2), l'entretoise (3) étant collée aux deux feuilles de verre et le joint périphérique entre l'entretoise et les zones périphériques étant étanché au moyen d'une matière adhésive d'étanchéité (7), **caractérisé en ce que** l'entretoise (3) comprend un cordon profilé en caoutchouc silicone.

2. Vitrage anti-feu suivant la revendication 1, **caractérisé en ce que** l'entretoise (3) est faite d'un caoutchouc silicone réticulable à haute température d'une dureté Shore-A de l'ordre de 40 à 60.

3. vitrage anti-feu suivant la revendication 1 ou 2, **caractérisé en ce que** l'entretoise (3) est faite d'un caoutchouc silicone ayant une température de décomposition supérieure à 400°C.

4. Vitrage anti-feu suivant la revendication 2 ou 3, **caractérisé en ce que** l'entretoise (3) est faite de polydiméthylsiloxane réticulable à haute température.

5. Vitrage anti-feu suivant l'une quelconque des revendications 1 à 4, **caractérisé en ce que** l'entretoise (3) est collée aux feuilles de verre (1,2) au moyen d'une colle (5) à base d'acrylate.

6. Vitrage anti-feu suivant l'une quelconque des revendications 1 à 5, **caractérisé en ce que** la couche intermédiaire renfermant de l'eau (4) est formée d'un polysilicate alcalin durci et contient avantageusement 30 à 55 % en poids de dioxyde de silicium, au maximum 16 % en poids d'oxyde de métal alcalin et jusqu'à 60 % en poids d'eau.

7. Vitrage anti-feu suivant l'une quelconque des revendications 1 à 6, **caractérisé en ce que** la matière adhésive servant à étancher le joint périphérique (7) est une colle à base de polysulfure.

8. Vitrage anti-feu suivant l'une quelconque des revendications 1 à 7, **caractérisé en ce qu'**un cordon (6) composé d'un matériau qui mousse sous l'action de la chaleur est disposé entre l'entretoise (3) et la matière adhésive d'étanchéité (7).

9. Vitrage anti-feu suivant la revendication 8, **caractérisé en ce que** le cordon (6) en matériau moussant sous l'effet de la chaleur contient des substances organiques et/ou inorganiques, en particulier des sels ou des oxydes, qui sous l'effet de la chaleur libèrent des gaz tels que notamment de la vapeur d'eau, de l'ammoniac, du dioxyde de soufre et/ou de l'acide borique.

10. Vitrage anti- feu suivant l'une quelconque des revendications 1 à 9, **caractérisé en ce qu'**au moins une des feuilles de verre (1,2) est en verre trempé.

11. Vitrage anti-feu suivant l'une quelconque des revendications 1 à 9, **caractérisé en ce que** les feuilles de verre (1,2) sont bombées selon une forme sensiblement cylindrique ou sphérique.

## Claims

1. Fire-resistant glazing assembly comprising at least two glass sheets (1, 2) connected together by a spacer (3) around their edges and a water-containing interlayer (4) which fills the intermediate space between the glass sheets (1, 2), the spacer (3) being adhesively bonded to the two glass sheets and the peripheral seal between the spacer and the peripheral regions being sealed by an adhesive sealing material (7), **characterized in that** the spacer (3) comprises a profiled bead made of silicone rubber.

2. Fire-resistant glazing assembly according to Claim 1, **characterized in that** the spacer (3) is made of a high-temperature crosslinkable silicone rubber having a Shore A hardness of about 40 to 60.

3. Fire-resistant glazing assembly according to Claim 1 or 2, **characterized in that** the spacer (3) is made of a silicone rubber having a decomposition temperature of greater than 400°C.

4. Fire-resistant glazing assembly according to Claim 2 or 3, **characterized in that** the spacer (3) is made of a high-temperature crosslinkable polydimethylsiloxane.

5. Fire-resistant glazing assembly according to any one of Claims 1 to 4, **characterized in that** the spacer (3) is adhesively bonded to the glass sheets (1, 2) by means of an acrylate-based adhesive (5).

6. Fire-resistant glazing assembly according to any one of Claims 1 to 5, **characterized in that** the water-containing interlayer (4) is formed from a cured alkali metal polysilicate and advantageously contains 30 to 55% by weight of silicon dioxide, at most 16% by weight of an alkali metal oxide and up to 60% by weight of water.

7. Fire-resistant glazing assembly according to any one of Claims 1 to 6, **characterized in that** the adhesive material serving to provide the peripheral seal (7) is a polysulphide-based adhesive.

8. Fire-resistant glazing assembly according to any one of Claims 1 to 7, **characterized in that** a bead (6) composed of a heat-activated foaming material is placed between the spacer (3) and the adhesive sealing material (7).

9. Fire-resistant glazing assembly according to Claim 8, **characterized in that** the bead (6) of heat-activated foaming material contains organic and/or inorganic substances, particularly salts or oxides, which, when heated, release gases, such as especially water vapour, ammonia or sulphur dioxide, and/or boric acid.

10. Fire-resistant glazing assembly according to any one of Claims 1 to 9, **characterized in that** at least one of the glass sheets (1, 2) is made of toughened glass.

11. Fire-resistant glazing assembly according to any one of Claims 1 to 9, **characterized in that** the glass sheets (1, 2) are bent into a substantially cylindrical or spherical shape.

## Patentansprüche

1. Brandschutzverglasung aus wenigstens zwei über einen Abstandshalter (3) am Rand miteinander verbundenen Glasscheiben (1, 2) und einer den Zwischenraum zwischen den Glasscheiben (1, 2) ausfüllenden wasserhaltigen Zwischenschicht (4), wobei der Abstandshalter (3) mit den beiden Glasscheiben (1, 2) verklebt ist und die Randfuge zwischen dem Abstandshalter (3) und den Randbereichen der Glasscheiben durch eine Dichtklebemasse (7) abgedichtet ist, **dadurch gekennzeichnet, dass** der Abstandshalter (3) einen Profilstrang aus Silikonkautschuk umfasst.

2. Brandschutzverglasung nach Anspruch 1, **dadurch gekennzeichnet, dass** der Abstandshalter (3) aus einem hochtemperaturvernetzenden Siliconkautschuk mit einer Shore-A-Härte von 40-60 besteht.

3. Brandschutzverglasung nach Anspruch 1 oder 2, **dadurch gekennzeichnet, dass** der Abstandshalter (3) aus einem Siliconkautschuk mit einer Zersetzungstemperatur von mehr als 400 °C besteht

4. Brandschutzverglasung nach Anspruch 2 oder 3, **dadurch gekennzeichnet, dass** der Abstandshalter (3) aus hochtemperaturvernetzendem Polydimethylsiloxan besteht.

5. Brandschutzverglasung nach einem der vorstehenden Ansprüche 1 bis 4, **dadurch gekennzeichnet, dass** der Abstandshalter (3) mit einem Kleber (5) auf Acrylatbasis mit den Glasscheiben (1,2) verklebt ist.

6. Brandschutzverglasung nach einem der vorstehenden Ansprüche 1 bis 5, **dadurch gekennzeichnet, dass** die wasserhaltige Zwischenschicht (4) aus einem gehärteten Alkali-Polysilikat besteht und bevorzugt 30 bis 55 Gew.-% Siliziumdioxid, höchstens 16 Gew.-% Alkali-Metalloxid und bis zu 60 Gew.-% Wasser enthält.

7. Brandschutzverglasung nach einem der vorstehenden Ansprüche 1 bis 6, **dadurch gekennzeichnet, dass** die Randnut abdichtende Dichtklebemasse (7) ein Polysulfidkleber ist.

8. Brandschutzverglasung nach einem der vorstehenden Ansprüche 1 bis 7, **dadurch gekennzeichnet, dass** ein aus unter Wärmeeinwirkung aufschäumenden Material bestehender Strang (6) zwischen dem Abstandshalter (3) und der Dichtklebemasse (7) angeordnet ist.

9. Brandschutzverglasung nach Anspruch 8, **dadurch gekennzeichnet, dass** der Strang (6) aus bei Hitzeeinwirkung aufschäumendem Material organische und/oder anorganische Stoffe, insbesondere Salze oder Oxide enthält, die bei erhöhter Temperatur Gase wie vor allem Wasserdampf, Ammoniak, Schwefeldioxid und/oder Borsäure freisetzen.

10. Brandschutzverglasung nach einem der vorstehenden Ansprüche 1 bis 9, **dadurch gekennzeichnet, dass** zumindest eine der Glasscheiben (1, 2) vorgespannt ist.

11. Brandschutzverglasung nach einem der vorstehenden Ansprüche 1 bis 9, **dadurch gekennzeichnet, dass** die Glasscheiben (1, 2) einer im Wesentlichen zylindrisch oder sphärischen Form entsprechend gebogen sind.
